# EUROPÄISCHE PATENTSCHRIFT

(11) **EP 0 618 667 B1**
(45) Veröffentlichungstag und Bekanntmachung des Hinweises auf die Patenterteilung: **26.06.1996**
(21) Anmeldenummer: 94104947.0
(22) Anmeldetag: 29.03.1994
(51) Int. Cl.: H02M 5/293, H02M 5/257

(54) **Verfahren zur Steuerung des Wechselstromes in einem Lastkreis und Vorrichtung zur Durchführung des Verfahrens**
Method for controlling a load with A.C. voltage and device to carry out this method
Procédé pour commander une charge en courant alternatif et dispositif pour mettre en oeuvre ce procédé

(30) Priorität: 01.04.1993 DE 4310723
(43) Veröffentlichungstag der Anmeldung: 05.10.1994
(73) Patentinhaber: ABB PATENT GmbH, D-68309 Mannheim (DE)
(72) Erfinder: Clever, Gerhard, D-58553 Halver (DE)
(74) Vertreter: Rupprecht, Klaus, Dipl.-Ing.

(56) Entgegenhaltungen:
- EP-A- 0 515 961
- WO-A-92/15052
- IEEE TRANSACTIONS ON INDUSTRIAL ELECTRONICS, Bd.37, Nr.2, April 1990, NEW YORK, US Seiten 156 - 159, XP000115743 H.M. EL-BOLEK 'A Microprocessor-Based Self-Adjusting System for Integral Cycle Power Control of RL Loads'

## Beschreibung

Die Erfindung betrifft ein Verfahren nach dem Oberbegriff des Anspruchs 1 und eine Vorrichtung nach dem Oberbegriff des Anspruchs 5.

Zur Steuerung von Lasten, z. B. zum Dimmen von Beleuchtungseinrichtungen, arbeitet man mit einem Phasenanschnitt oder mit einem Phasenabschnitt. Ein Phasenanschnitt wird durch eine Verzögerung des Einschaltens der Last erreicht und endet beim Nulldurchgang de Wechselstromes, also am Ende der jeweiligen Wechselstromhalbwelle. Er läßt sich mit allen steuerbaren Halbleitern, also auch mit nicht abschaltbaren Halbleitern, wie Thyristoren und Triacs realisieren. Beim Phasenabschnitt erfolgt keine Zündverzögerung, so daß die Schaltstrecke des steuerbaren Halbleiters schon bei Beginn der Halbwelle durchgeschaltet, aber noch vor ihrem Ende abgeschaltet wird. Das Abschalten einer Spannung ist aber mit normalen Thyristoren oder Triacs nicht möglich, so daß hierzu z. B. Bipolartransistoren, Power-MOS-Transistoren, IGBT, GTO, MCT usw. erforderlich sind.

Die starke Verbreitung von Niedervolthalogenlampen und der Wunsch diese zu dimmen, stößt auf die Schwierigkeit, daß ein Teil dieser Beleuchtungseinrichtungen an elektronischen Transformatoren mit kapazitivem Verhalten und ein anderer Teil an konventionellen, also induktiven Transformatoren betrieben wird. Um hohe Abschaltspannungen zu vermeiden, müssen induktive Lasten im Phasenanschnitt betrieben werden und um hohe Einschaltströme zu vermeiden, benutzte man bei kapazitiven Lasten den Phasenabschnitt.

Wird die richtige Zuordnung des Dimmers zur jeweiligen Last nicht beachtet, so sind Funktionsstörungen zu erwarten, die bisweilen sogar zur Zerstörung des Dimmers oder Transformators führen können. Da insbesondere von Laien diese Problematik nicht übersehen wird, kommt es im Zuge der zunehmenden Verbreitung von Niedervolthalogenbeleuchtungsanlagen zu zahlreichen Reklamationsfällen.

Aus der DE-A1-41 17 122 ist bereits eine Schaltung zur Steuerung eines Wechselstromes mit Hilfe steuerbarer Halbleiter bekannt, die in Abhängigkeit von einem Steuersignal mindestens einen Teil der positiven oder negativen Halbwelle des Wechselstromes einer Last zuführt. Als steuerbare Halbleiter dienen zwei mit ihren Schaltstrecken in Reihe liegende Transistoren, denen jeweils eine Inversdiode parallelgeschaltet ist. Das so gebildete Leistungsteil liegt in Reihe zu einer Last an einer Wechselstromquelle, und wird durch eine Steuerlogik entsprechend gesteuert. Im Prinzip ist diese Schaltung sowohl zum Phasenanschnitt als auch zum Phasenabschnitt geeignet, doch muß sie für die jeweilige Betriebsart ausgelegt werden, so daß für einen Phasenanschnitt eine andere Vorrichtung zur Anwendung gelangt, als für den Phasenabschnitt.

Demgegenüber ist aus der WO-A-92/15052 ein Verfahren und eine Einrichtung bekannt, bei denen zur Steuerung eines Wechselstromes in einem Lastkreis abschaltbare Halbleiterschalter dienen, die sich zur Phasenan-und Phasenabschnittssteuerung eignen und bei einer induktiven Last automatisch im Phasenanschnitt betrieben werden. Als Grundeinstellung wird jedoch mit einem Phasenabschnitt gearbeitet, so daß beim Anlegen der Netzspannung zunächst die unerwünschte, hohe induktive Abschaltspannung des Phasenabschnitts entstehen muß und erst diese ein Umschalten auf Phasenanschnitt bewirken kann.

Aufgabe der Erfindung ist es, ein Verfahren und eine Vorrichtung zur Steuerung des Wechselstromes in einem Lastkreis zu schaffen, die aktiv bzw. präventiv von vornherein den für die jeweilige Lastart geeigneten Phasenan-oder Phasenabschnitt einschaltet.

Diese Aufgabe wird durch die in den Ansprüchen 1 und 5 gekennzeichneten Merkmale gelöst. Zweckmäßige Ausgestaltungen und Weiterbildungen des Erfindungsgegenstandes sind in den Unteransprüchen genannt.

Erfindungsgemäß beginnt nach dem Anlegen der Netzspannung zunächst ein Testprogramm zu laufen, durch das die Art der Last ermittelt wird, so daß die steuerbaren Halbleiterschalter anschließend bei induktiver Last im Phasenanschnitt und bei kapazitiver und/oder ohmscher Last im Phasenabschnitt betrieben werden können. Das Testprogramm ist hierbei so ausgelegt, daß die angeschlossene Last mit mindestens einem Stromimpuls beaufschlagt wird und aus dem Strom- oder Spannungsverhalten der Last auf die Lastart geschlossen werden kann.

Eine vorteilhafte Methode die Reaktion der Last auf den Stromimpuls zu ermitteln besteht darin, die Abschaltspannung zu prüfen, die beim Abschalten des Stromimpulses an der Last entsteht. Wird ein vorgegebener Grenzwert der Abschaltspannung überschritten, so kann hieraus auf das Vorliegen einer induktiven Last geschlossen werden. Wird dieser Grenzwert nicht erreicht, so muß es sich dementsprechend um eine kapazitive und/oder ohmsche Last handeln.

Um bei induktiver Last Spannungsrückwirkungen soweit wie möglich auszuschalten, ist weiterhin vorgesehen, daß bei induktiver Last eine Stromsynchronisation eingeschaltet wird, die den Nulldurchgang des Laststromes erfaßt und die im Phasenanschnitt betriebenen Halbleiterschalter im Nulldurchgang des Laststromes abschaltet.

Alternativ hierzu wird nach der Ermittlung einer ohmschen und/oder kapazitiven Last eine Spannungsynchronisation eingeschaltet, die den Nulldurchgang der Netzspannung erfaßt und die im Phasenanschnitt betriebenen Halbleiterschalter im Nulldurchgang der Wechselspannung einschaltet.

Ausgehend von der aus der WO-A-92/15052 bekannten Schaltungsanordnung wird erfindungsgemäß eine Vorrichtung zur Durchführung des vorbeschriebenen Verfahrens dadurch geschaffen, daß als Steuereinheit eine programmierte Steuereinheit verwendet wird, die so programmiert ist, daß sie den Ablauf eines Testprogramms ermöglicht. Mit Hilfe dieses Testprogramms ermittelt die Steuereinheit selbsttätig die Art der Last und kann dann ebenso selbsttätig bei induktiver Last einen Phasenanschnittmodus und bei kapazitiver und/oder ohmscher Last eine Phasenabschnittmodus vorgeben. Dabei werden, die beim Abschalten des zu Testzwecken vorgegebenen Stromimpulses an der Last entstehende Abschaltspannung mit Hilfe eines Lastdetektors erfaßt, derart, daß dieser beim Überschreiten eines vorgegebenen Grenzwertes das Vorliegen einer induktiven Last oder anderenfalls einer kapazitiven und/oder ohmschen Last signalisiert und die Steuereinheit diese Information zur Auswertung erhält.

Um sowohl bei Phasenanschnitt als auch bei Phasenabschnitt jeweils im richtigen Moment ein- bzw. abschalten zu können, ist die Vorrichtung mit einer Funktionseinheit zur Stromsynchronisation und einer weiteren Funktionseinheit zur Spannungssynchronisation ausgestattet. Die Steuereinheit kann somit bei induktiver Last die Stromsynchronisation einschalten, die den Nulldurchgang des Laststromes erfaßt und bei kapazitiver und/oder ohmscher Last die Spannungssynchronisation einschalten, die den Nulldurchgang der Wechselspannung feststellt.

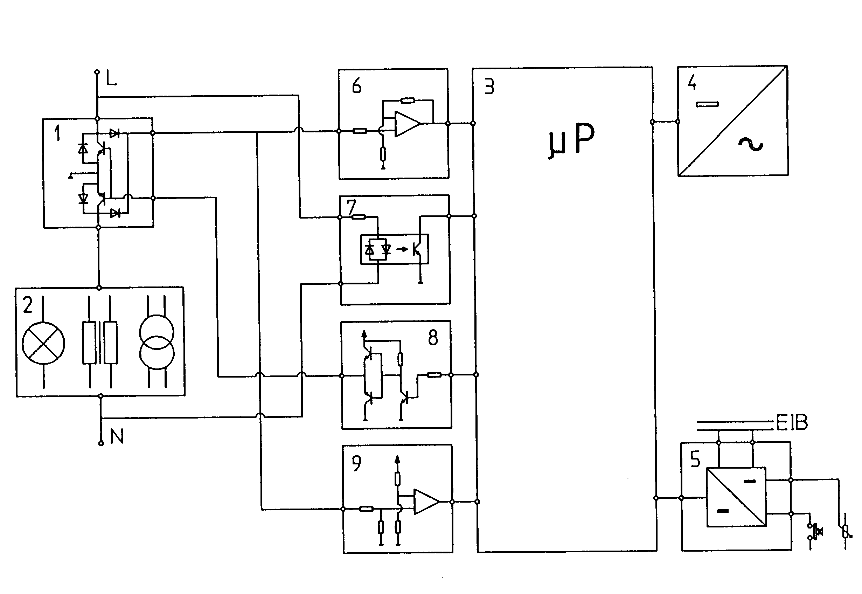

Ein Ausführungsbeispiel der Vorrichtung ist in der einzigen Figur dargestellt und wird im folgenden näher beschrieben.

Zwischen einem Phasenleiter L und einem Nulleiter N liegen ein Leistungsteil 1 und dazu in Reihe eine Last 2 an einer Netzwechselspannung. Das Leistungsteil 1 ist entsprechend DE-A1- 41 17 122 in bekannter Weise mit zwei Power-MOS-Transistoren mit integrierter Inversdiode in Common-Source-Schaltung aufgebaut. Wesentlich ist, daß abschaltbare Halbleiterschalter mit oder ohne integrierte Inversdiode verwendet werden, weil nur mit diesen ein Phasenabschnitt realisierbar ist. Dementsprechend können z. B. Bipolar-Transistoren, Power-MOS-Transistoren, IGBT, GTO oder MCT eingesetzt werden. Als Last 2 können normale, im wesentlichen als ohmsche Last wirkende Glühlampen, konventionelle Kupfer/Eisen-Transformatoren oder im wesentlichen kapazitiv wirkende elektronische Transformatoren zum Einsatz kommen.

Die Steuerung des Leistungsteils 1 erfolgt durch eine Steuereinheit 3, die ihre Vorgabe durch einen Stellwert erhält, der mit Hilfe einer Bedieneinheit erzeugt wird. Als Bedieneinheit können wahlweise Taster, Potentiometer oder Bussysteme, wie der in der Hausleittechnik eingesetzte EIB-Bus, fungieren. Als Steuereinheit 3 dient vorzugsweise ein Mikroprozessor, der so programmierbar ist, daß er seiner eigentlichen Funktion zur Steuerung des Leistungsteils 1 vorausgehend einen Testlauf initiieren kann.

Für das ordnungsgemäße Arbeiten der Steuereinheit benötigt diese Informationen, die sie über verschiedene Funktionseinheiten erhält. So ist eine Stromsynchronisation 6 vorgesehen, die zur Steuerung induktiver Lasten mit Phasenanschnitt benötigt wird und den Nulldurchgang des Laststromes erfaßt. Hierdurch gelingt es, die Halbleiterschalter ohne Spannungsrückwirkung der Last abzuschalten. Bei Verwendung von Power-MOS-Transistoren kann unter Umständen die Auswertung des Spannungsabfalls am Einschaltwiderstand zwischen der Drain- und Sourceelektrode zur Strommessung genügen. Bei Leistungsschaltern mit bipolarem Verhalten empfiehlt sich die Strommessung über einen Shunt.

Weiterhin ist eine Spannungssynchronisation 7 vorgesehen, die zur Steuerung kapazitiver Lasten mit Phasenabschnitt erforderlich ist. Hierzu erhält die Steuereinheit 3 die Information, wann der Nulldurchgang der Netzspannung erreicht ist, so daß sie zu diesem Zeitpunkt die Halbleiterschalter einschalten kann. Unerwünschte Einschaltstromspitzen können so vermieden werden. Zur Spannungssynchronisation kann sowohl die Spannung an den gesperrten Transistoren, als auch unmittelbar die Netzspannung verwendet werden.

Im Rahmen des mit der Steuereinheit 3 erzeugten Testprogramms spielt weiterhin ein Lastdetektor 9 eine wichtige Rolle. Mit seiner Hilfe werden die Augenblickswerte von Laststrom und Spannung am Halbleiterschalter erfaßt und gegebenenfalls verstärkt, um bei Bedarf von der Steuereinheit abgerufen werden zu können. Eine Auswertung des Strom- oder Spannungspegels kann bereits im Lastdetektor 9 oder auch erst in der Steuereinheit 3 erfolgen.

Entsprechend dem Ergebnis dieser Auswertung wird der Leistungsteil 1 von der Steuereinheit 3 über eine Treiberstufe 8 im Phasenanschnitt oder Phasenabschnitt gesteuert. Die Treiberstufe 8 wandelt das digitale Ausgangssignal der Steuereinheit 3 in ein für die verwendeten Halbleiterschalter geeignetes Steuersignal um.

Die Vorrichtung, insbesondere die Treiberstufe 8 und die Steuereinheit 3 werden von einem Netzteil 4 mit Strom versorgt. Das Netzteil 4 kann als Widerstands- oder Transformatornetzteil aufgebaut werden.

Wird die beschriebene Vorrichtung durch Anlegen einer Netzspannung eingeschaltet, so wird in einem Vorlauf durch die Steuereinheit 3 zunächst ein Testprogramm ausgelöst, mit dem die Art der Last 2 ermittelt wird. Hierzu gibt die Steuereinheit 3 zunächst einen kurzen Steuerimpuls an den Leistungsteil 1 weiter, der dementsprechend kurzzeitig durchschaltet und die Last mit einem Stromimpuls versorgt. Handelt es sich um eine induktive Last, so wird an dieser beim Abschalten des Stromimpulses eine entsprechend hohe Abschaltspannung entstehen, die vom Lastdetektor 9 erfaßt und als entsprechende Information an die Steuereinheit 3 weitergegeben wird bzw. abgerufen werden kann.

Eine induktive Last vorausgesetzt wird die Steuereinheit 3 nun einen Phasenanschnitt vorgeben und den Leistungsteil 1 entsprechend steuern. Hierzu wird der Nulldurchgang des Laststromes bei der Stromsynchronisation 6 abgerufen.

Ergibt sich aus dem Signal des Lastdetektors 9, daß eine ohmsche und/oder kapazitive Last vorliegt, so gibt die Steuereinheit 3 einen Phasenabschnitt vor und entnimmt hierzu entsprechende Informationen aus der Spannungssynchronisation 7, um die Halbleiterschalter jeweils im Nulldurchgang der Netzspannung einschalten zu können.

## Patentansprüche

1. Verfahren zur Steuerung des Wechselstromes in einem Lastkreis mit Hilfe abschaltbarer Halbleiterschalter, die im Phasenan- oder Phasenabschnitt arbeiten können und bei denen eine Steuereinheit dafür sorgt, daß sie in Abhängigkeit vom Lastverhalten betrieben werden und bei induktiver Last im Phasenanschnitt arbeiten, dadurch gekennzeichnet, daß beim Anlegen der Netzspannung zunächst ein Testprogramm zu laufen beginnt, bei dem die angeschlossene Last mit mindestens einem vorgegebenen Stromimpuls beaufschlagt wird und anschließend aus dem Strom- oder Spannungsverhalten der Last gegenüber diesem Stromimpuls die Art der Last ermittelt wird und erst dann die Halbleiterschalter für einen der Last entsprechenden Phasenan- oder Phasenabschnitt freigegeben werden, und daß die Halbleiterschalter bei kapazitiver und/oder ohmscher Last im Phasenabschnitt arbeiten.

2. Verfahren nach Anspruch 1, dadurch gekennzeichnet, daß die Abschaltspannung geprüft wird, die beim Abschalten des Stromimpulses an der Last entsteht und im Fall des Überschreitens eines vorgegebenen Grenzwertes der Abschaltspannung das Vorliegen einer induktiven Last und anderenfalls einer kapazitiven und/oder ohmschen Last signalisiert wird.

3. Verfahren nach einem der vorhergehenden Ansprüche, dadurch gekennzeichnet, daß nach der Ermittlung einer induktiven Last eine Stromsynchronisation eingeschaltet wird, die den Nulldurchgang des Laststromes erfaßt und daß die im Phasenanschnitt betriebenen Halbleiterschalter im Nulldurchgang des Laststromes abgeschaltet werden.

4. Verfahren nach einem der Ansprüche 1 oder 2, dadurch gekennzeichnet, daß nach der Ermittlung einer ohmschen und/oder kapazitiven Last eine Spannungssynchronistion eingeschaltet wird, die den Nulldurchgang der Netzspannung erfaßt und daß die im Phasenabschnitt betriebenen Halbleiterschalter im Nulldurchgang der Wechselspannung eingeschaltet werden.

5. Vorrichtung zur Durchführung des Verfahrens nach einem der Ansprüche 1 bis 4, mit einem abschaltbare Halbleiterschalter enthaltenden, gesteuerten Leistungsteil (1) zur Steuerung des einer Last (2) zugeführten Wechselstroms durch Phasenan- oder Phasenabschnitt, mit einer Bedieneinheit (5) zum Einschalten und zur Vorgabe eines Stellwertes, und mit einer Steuereinheit (3) zur Steuerung des Leistungsteils (1) entsprechend dem Stellwert und zur selbsttätigen Vorgabe eines Phasenan- oder Phasenabschnitts entsprechend dem Lastverhalten, wobei eine induktive Last zu einem Phasenanschnitt führt, dadurch gekennzeichnet, daß es sich bei der Steuereinheit (3) um eine programmierte Steuereinheit handelt, die so programmiert ist, daß sie beim Anlegen der Netzspannung den Ablauf eines Testprogramms ermöglicht, auf Grund dessen die Art der Last erkennbar ist und die Steuereinheit (3) hierbei einen kurzen Steuerimpuls an das Leistungsteil (1) weitergibt, das kurzzeitig durchschaltet und die Last mit einem Stromimpuls versorgt, und daß ein Lastdetektor (9) vorgesehen ist, der die beim Abschalten des Stromimpulses an der Last (2) entstehende Abschaltspannung erfaßt und der beim Überschreiten eines vorgegebenen Grenzwertes das Vorliegen einer induktiven Last und andernfalls einer kapazitiven und/oder ohmschen Last signalisiert und die Steuereinheit (3) diese Information zur Auswertung erhält und bei kapazitiver und/oder ohmscher Last Phasenabschnitt vorgibt.

6. Vorrichtung nach Anspruch 5, dadurch gekennzeichnet, daß eine Funktionseinheit zur Stromsynchronisation (6) und eine weitere zur Spannungssynchronisation (7) vorgesehen ist und die Steuereinheit (3) bei induktiver Last die Stromsynchronisation einschaltet, die den Nulldurchgang des Laststromes erfaßt und die Steuereinheit (3) bei kapazitiver und/oder ohmscher Last die Spannungssynchronisation (7) einschaltet, die den Nulldurchgang der Wechselspannung erfaßt.

## Claims

1. Method for controlling the alternating current in a load circuit with the aid of interruptible semiconductor switches which can operate in phase lag or phase lead, and in the case of which a control unit ensures that they are operated as a function of the load behaviour and, in the case of an inductive load, operate in phase lag, characterized in that when the mains voltage is applied, a test program is first initiated, in which at least one predetermined current pulse is applied to the connected load and the type of load is subsequently determined from the current or voltage behaviour of the load relative to this current pulse, and only then are the semiconductor switches enabled for a phase lag or phase lead corresponding to the load, and in that, in the case of a capacitive and/or resistive load, the semiconductor switches operate in phase lead.

2. Method according to Claim 1, characterized in that the turn-off voltage which occurs across the load when the current pulse is turned off is tested and, if a predetermined limit value of the turn-off voltage is exceeded, the presence of an inductive load is signalled, and otherwise the presence of a capacitive and/or resistive load is signalled.

3. Method according to one of the preceding claims, characterized in that, after an inductive load has been determined, a current synchronization system which detects the zero crossing of the load current is turned on, and in that the semiconductor switches driven in phase lag are turned off at the zero crossing of the load current.

4. Method according to Claim 1 or 2, characterized in that, after a resistive and/or capacitive load has been determined, a voltage synchronization system which detects the zero crossing of the mains voltage is turned on, and in that the semiconductor switches operated in phase lead are turned on at the zero crossing of the AC voltage.

5. Device for implementing the method according to one of Claims 1 to 4, with a controlled power section (1), containing interruptible semiconductive switches, for controlling by phase lag or phase lead the alternating current supplied to a load (2), with an operating unit (5) for switching on and for stipulating a control value, and with a control unit (3) for controlling the power section (1) in accordance with the control value and for automatic stipulation of a phase lag or phase lead corresponding to the load behaviour, an inductive load leading to a phase lag, characterized in that the control unit (3) is a programmed control unit which is programmed in such a way that, when the mains voltage is applied, it allows execution of a test program, on the basis of which the type of load can be recognized, and the control unit (3) in this case feeds a short control pulse to the power section (1) which is temporarily connected and supplies the load with a current pulse, and in that a load detector (9) is provided, which detects the turn-off voltage produced across the load (2) when the current pulse is turned off and, when a predetermined limit value is exceeded, signals the presence of an inductive load, and otherwise signals the presence of a capacitive and/or resistive load, and the control unit (3) receives this information for evaluation and, in the case of a capacitive and/or resistive load, stipulates phase lead.

6. Device according to Claim 5, characterized in that a functional unit for current synchronization (6) and a further functional unit for voltage synchronization (7) are provided, and, in the case of an inductive load, the control unit (3) turns on the current synchronization system, which detects the zero crossing of the load current, and, in the case of a capacitive and/or resistive load, the control unit (3) turns on the voltage synchronization system (7), which detects the zero crossing of the AC voltage.

## Revendications

1. Procédé pour la commande du courant alternatif dans un circuit de charge avec l'aide de commutateurs à semi-conducteur qui peuvent être interrompus et qui peuvent fonctionner en retard de phase ou en découpage de phase et dans le cas desquels une unité de commande veille à ce qu'ils soient exploités en fonction du comportement de la charge et qu'ils fonctionnent en retard de phase dans le cas d'une charge inductive, caractérisé en ce que, lors de l'application de la tension de réseau, il commence à se dérouler d'abord un programme de test dans le cas duquel la charge raccordée est alimentée avec au moins une impulsion de courant prédéterminée et ensuite le genre de la charge est déterminé à partir du comportement du courant ou de la tension de la charge par rapport à cette impulsion de courant et alors seulement les commutateurs à semi-conducteur sont libérés pour un retard de phase ou un découpage de phase correspondant à la charge, et en ce que les commutateurs à semi-conducteur fonctionnent en découpage de phase dans le cas d'une charge capacitive et/ou ohmique.

2. Procédé suivant la revendication 1, caractérisé en ce qu'on examine la tension d'interruption qui apparaît à l'endroit de la charge lors de l'interruption de l'impulsion de courant et en ce que, au cas du dépassement vers le haut d'une valeur limite prédéterminée de la tension d'interruption, la présence d'une charge inductive, et dans un autre cas d'une charge capacitive et/ou ohmique, est signalée.

3. Procédé suivant l'une des revendications précédentes, caractérisé en ce qu'après la détermination d'une charge inductive, on enclenche une synchronisation de courant qui saisit le passage par zéro du courant de charge et en ce que les commutateurs à semi-conducteur exploités en retard de phase sont interrompus au passage par zéro du courant de charge.

4. Procédé suivant l'une des revendications 1 et 2, caractérisé en ce qu'après la détermination d'une charge ohmique et/ou capacitive, on enclenche une synchronisation de tension qui saisit le passage par zéro de la tension de réseau et en ce que les commutateurs à semi-conducteur exploités en découpage de phase sont enclenchés au passage par zéro de la tension alternative.

5. Dispositif pour la mise en oeuvre du procédé suivant l'une des revendications 1 à 4, comprenant une partie à puissance (1), commandée et comportant des commutateurs à semi-conducteur qui peuvent être interrompus pour la commande, par retard de phase ou par découpage de phase, du courant alternatif fourni à une charge (2), comprenant une unité de manoeuvre (5) pour l'enclenchement et pour la transmission d'une valeur de réglage et comprenant une unité de commande (3) pour la commande de la partie à puissance (1) conformément à la valeur de réglage et pour la transmission automatique d'un retard de phase ou d'un découpage de phase conformément au comportement de la charge, une charge inductive conduisant à un retard de phase, caractérisé en ce qu'il s'agit, dans le cas de l'unité de commande (3), d'une unité de commande programmée qui est programmée de façon à ce qu'elle rende possible, lors de l'application de la tension de réseau, le déroulement d'un programme de test sur la base duquel le genre de la charge peut être perçu et en ce que l'unité de commande (3) transmet à ce sujet une courte impulsion à la partie à puissance (1) qui commute pendant un court moment et qui alimente la charge avec une impulsion de courant et en ce qu'il est prévu un détecteur de charge (9) qui saisit la tension d'interruption apparaissant à l'endroit de la charge (2) lors de l'interruption de l'impulsion de courant et qui signale la présence d'une charge inductive lors du dépassement vers le haut d'une valeur limite prédéterminée et sinon d'une charge capacitive et/ou ohmique et en ce que l'unité de commande (3) reçoit cette information pour l'évaluation et donne au préalable un découpage de phase dans le cas d'une charge capacitive et/ou ohmique.

6. Dispositif suivant la revendication 5, caractérisé en ce qu'une unité fonctionnelle pour la synchronisation de courant (6) et une autre pour la synchronisation de tension (7) sont prévues et en ce que l'unité de commande (3) enclenche, dans le cas d'une charge inductive, la synchronisation de courant qui saisit le passage par zéro du courant de charge et l'unité de commande (3) enclenche, dans le cas d'une charge capacitive et/ou ohmique, la synchronisation de tension (7) qui saisit le passage par zéro de la tension alternative.
